# EUROPEAN PATENT SPECIFICATION

(11) **EP 2 089 330 B1**
(45) Date of publication and mention of the grant of the patent: **09.07.2014**
(21) Application number: 07819307.5
(22) Date of filing: 25.10.2007
(51) Int. Cl.: C03B 5/12, C03B 37/04

(54) **METHOD AND APPARATUS FOR THE PRODUCTION OF MINERAL FIBRES**
VERFAHREN UND VORRICHTUNG ZUR HERSTELLUNG VON MINERALFASERN
PROCÉDÉ ET APPAREIL POUR LA FABRICATION DE FIBRES MINÉRALES

(30) Priority: 02.11.2006 EP 06255645
(43) Date of publication of application: 19.08.2009
(73) Proprietor: Rockwool International A/S, 2460 Hedehusene (DK)
(72) Inventor: JENSEN, Leif, Moeller, 2640 Hedehusene (DK)
(74) Representative: Samuels, Lucy Alice
(86) International application number: PCT/EP2007/009255
(87) International publication number: WO 2008/052692

(56) References cited:
- WO-A-99/28247
- GB-A- 2 058 309
- JP-A- 1 075 614
- US-A- 4 171 971
- US-A- 4 701 216
- US-A- 4 818 221
- US-A- 4 822 388
- US-A- 5 443 618

## Description

### Field of the Invention

The present invention relates to a process for the production of mineral fibres and to an apparatus which can be used in such a process.

### Background to the Invention

It is well known to produce mineral wool by charging a furnace with a mixture of mineral materials and melting those materials to form a mineral melt, which is subsequently converted into fibres.

One particular type of process involves melting of the charge in a furnace which, usually as a result of the type of fuel used, specifically coke, has a reducing atmosphere. An example is a cupola furnace.

In such a process a stack of solid mineral material and fuel, usually coke, is introduced via the top of the furnace. The fuel is burnt in a melting zone, thereby creating heat for melting the mineral materials. The burning of the fuel may be aided by input of combustion air through inlets provided in the melting zone, commonly referred to as tuyeres. Despite the addition of air through the tuyeres, an overwhelmingly reducing atmosphere is produced which means that iron oxides in the charge materials are subject to reduction and molten iron is generated. This gathers in the base of the furnace. Above the molten iron but below the melting zone there is a melt pool of mineral melt. The mineral melt is removed from the furnace and sent to a fibre-forming apparatus.

Since charge is continuously fed to the furnace, molten iron is continuously generated and must periodically be removed from the furnace. This is done by "tapping" which involves creating an opening in the base of the furnace through which the molten iron escapes.

In a conventional process the iron must be tapped at regular intervals, the intervals being determined by certain process parameters, such as build-up of pressure in the furnace or conveniently at certain times in the production planning such as at product change-over. Although tapping can be carried out while the furnace is being used, the tapping is desirably done at intervals which are as long as possible to maximise convenience in the process. The conditions which necessitate tapping, such as buildup of pressure, are monitored and tapping is carried out when required.

Initially, a standard cupola furnace process may involve tapping every 15 to 20 hours. However, there are problems which arise over time with cupola furnaces, whereby it becomes necessary to tap the molten iron at ever-decreasing intervals.

This problem is associated with solidification of material in the base zone. The material in the base zone that has solidified cannot be removed by tapping. This means that the tapping does not have the full desired effect as only a small amount of molten iron can be removed. Furthermore, the material can solidify over the holes which are normally used for tapping. This means that the operators have to channel through the solidified material in order to reach molten iron. This is extremely inconvenient and time consuming.

In some cases the intervals between tapping can decrease over the course of just a few days from an initial interval of 15 to 20 hours, to an interval of just 2 hours. This is clearly highly inconvenient for the operators. Once the level of solidified material has built up to the extent that tapping is necessary approximately every 4 hours, it becomes necessary to remove the solidified material altogether. This can only be done by completely stopping production and physically removing the base of the furnace to remove the solidified material and replacing the base before restarting production.

Although the solution of tapping at ever decreasing intervals with intermittent complete stoppage and removal of solidified material is inconvenient, this has, for many years, been the standard way of dealing with the problem.

US 4,822,388 discusses the problem of what is referred to as "siliceous build up" in the hearth area of the cupola and acknowledges the conventional solution of removing the hearth to eliminate the build up. This document aims to reduce the build up of solidified material by charging chemical agents such as fluorides to the cupola. More specifically, rather than normal fuels, materials which are very high in fluorine, such as the lining which has been used in the production of aluminium, commonly referred to as "spent pot lining", are used. The fluorine is said to reduce the build up by decreasing the viscosity of the melt, thereby reducing its tendency to solidify.

This solution requires changing the fuel used in the cupola, specifically to one which is high in fluoride, which may be difficult to source. Burning such fuels has a major disadvantage in that environmentally harmful gases are produced which need further processing before they can be released to the atmosphere. This is expensive and inconvenient.

US-A-5 443 616 relates to an "Earth Melter". The melter is designed for the melting of waste materials, which may take the form of e.g. municipal solid wastes, ash from the incineration of municipal solid wastes, medical wastes, hazardous chemical wastes, soils contaminated with hazardous wastes, etc. In one embodiment, air or gases enriched in oxygen can be injected through a conduit.

Hence, there remains a need to address the problem of reduced tapping intervals during mineral fibre production in a cost effective and convenient manner.

### Summary of the Invention

According to the first aspect of the invention we provide a process for the production of mineral fibres comprising:
providing a furnace;
charging to the furnace mineral materials which comprise iron oxides;
melting the charged mineral materials in a reducing atmosphere, such that there is a base zone in the furnace in which molten iron collects, and a melt pool above the base zone where mineral melt collects;
removing mineral melt from the furnace and converting it to mineral fibres; and
removing molten iron from the base zone;
characterised in that, during the process, an additive is released directly into the base zone of the furnace wherein the additive comprises one or more substances selected from oxidising agents and non-reducing gases.

According to a second aspect of the invention we provide apparatus for the production of mineral fibres from mineral materials comprising iron oxide, the apparatus comprising:
a furnace which comprises a top section, a middle section, and a base section, wherein
the top section comprises a mineral material inlet,
the middle section comprises a mineral melt outlet, and
the base section comprises a tapping outlet through which molten iron can be removed and injection means through which an additive can be injected; and
fiberising means which are positioned in fluid communication with the mineral melt outlet and are capable of converting mineral melt to mineral fibres.

We have found that the provision of such additives directly into the base zone can significantly reduce the problem of reduced tapping intervals. It has been found that solidification of the material in the base zone is greatly reduced and even substantially eliminated. This means that the period for which the furnace can run continuously is no longer limited by the tapping interval. The tapping intervals can be maintained substantially at their initial rate, i.e., tapping every 15 to 20 hours. This is a huge improvement over the prior art and can be achieved without altering the composition of the fuel or the charge materials.

The effects of provision of additive into the base zone are observed particularly when the charge contains a high content of silica, and/or when conditions are such that there are relatively high levels of silicon metal combined with the molten iron in the base zone.

The oxidising agent can be in any physical form - solid, liquid or gas. In preferred embodiments the additive material comprises an oxidising agent which is a gas. Examples are oxygen, for instance in the form of air or pure oxygen, and ozone. Thus in this case the additive comprises a single substance (oxygen gas) which is both an oxidising agent and a non-reducing gas.

It is surprising that the injection of oxidising agent and/or non-reducing gas can have such an effect on the tapping interval, especially in the context of a furnace in which the overwhelming atmosphere is reducing and the additive is not believed to affect the total amount of molten iron produced.

### Detailed Description of the Invention

The invention is concerned with providing a modification to conventional processes and apparatuses for production of mineral fibres.

The invention is useful in any process in which a furnace that has a reducing atmosphere is used, as it is the reducing atmosphere that causes iron oxides to be reduced to molten iron, which has to be tapped. The invention addresses the problem of reduced tapping intervals during use, which has been observed in such systems.

Any furnace in which a reducing atmosphere is formed during melting can be used. Generally the reducing atmosphere is produced as a result of the type of fuel used in the furnace, such as coke. An example is a cupola furnace. Another example is a blast furnace.

Mineral materials are charged to the furnace in a conventional manner. They are usually mixed with a fuel such as coke. The problems associated with reducing tapping intervals arise when the raw materials comprise iron oxides.

It has been found that the problem of reduced tapping intervals is particularly pronounced when a relatively high proportion of silica is reduced in the process to molten silicon, in particular when over 4 or 5% and in particular around 6% of the total molten material that collects in the base zone is silicon. Therefore, the present invention is particularly effective when the materials charged comprise silicon oxides (commonly known as silica).

The reduction of other oxides, particularly oxides of phosphorus, may also be associated with the problem of reduced tapping intervals.

Particular problems are also observed when the mineral melt has a composition -as follows, measured as weight of oxides.

| | |
|---|---|
| SiO₂ | 32 to 48%, preferably 33 to 43% |
| Al₂O₃ | 10 to 30%, preferably 16 to 24% |
| CaO | 10 to 30%, CaO + MgO preferably 23 to 33% |
| MgO | 2 to 20% |
| FeO | 2 to 15%, preferably 3 to 9% |
| Na₂O + K₂O | 0 to 12%, preferably 1 to 8% |
| TiO₂ | 0 to 6%, preferably 0 to 3% |
| Other Elements | 0 to 15% |

In particular, the level of Al₂O₃ is preferably at least 16%. These fibres are of the type which have particularly good biodegradabiilty as well as good durability in use. It is thought that the particularly high level of aluminium oxide contributes to the tendency towards reduced tapping intervals.

The invention is of particular value when the mineral charge comprises silicon and/or silicon compounds, including silica and other silicon compounds.

In the furnace the fuel is burnt and the charged raw materials are melted, as is conventional. Some of the iron oxide present is reduced to molten iron, which collects at the base of the furnace.

The region at the base of the furnace in which the molten iron collects is termed the "base zone". The material that collects in the base zone is mostly iron as this is easily reduced although, as noted above, other oxides may have also been reduced and may collect with the iron in this zone. In particular, the material in the base zone normally comprises at least 70 or 80% by weight iron. It can also comprise silicon, usually less than 10% by weight, and the level of silicon can be at least 1% or 2%, for example around 6%. It can also comprise phosphorus and carbon, usually in a total amount of less than 10% by weight. There may be at least 0.5% of each of phosphorus and carbon, for example 2 or 3% of each independently. Usually the amount of each of phosphorus and carbon is not more than 5%.

The majority of the charged mineral materials are melted without being reduced and form a mixture of melted mineral materials which is called a mineral melt. The mineral melt is less dense than the molten iron, so it floats in a melt pool on top of the base zone.

The mineral melt is removed from the furnace and is fed to fiberising means, where it is converted into mineral fibres. Apparatuses for making mineral wool fibres from a mineral melt are well known and comprise spinning rotors which are usually horizontally or vertically arranged. The melt is poured on to a spinning rotor and due to centrifugal forces is thrown from the rotor as fibres. It is preferred to use a series of rotors. Processes and equipment that are suitable for forming mineral fibres from mineral melt are well known.

In one known type of system the fibres are formed by pouring mineral melt on to the external surface of one or more rotors which are mounted for rotation about a horizontal axis. Generally there are two or more rotors and melt poured on to the first rotor is thrown from that rotor partially as fibres and partially on to a subsequent rotor, from which it is thrown partially as more fibres and partially on to a third rotor, etc. Most commonly there are three or, in particular, four rotors. Such a system is known as a cascade spinner.

Alternative forms of apparatus include rotors mounted for rotation about a vertical axis, such as a spinning cup.

The molten iron is removed from the furnace, usually at intervals, in a process commonly known as tapping. There is usually a channel through the bottom of the furnace which can be opened to allow the molten iron to drain away. The molten, iron is collected and may then be used in other processes.

The present invention essentially involves releasing into the base zone an additive which comprises at least one substance selected from oxidising agents and non-reducing gases. Introduction of such additives into the base zone has been found to substantially reduce or even eliminate the reduction in tapping intervals that is observed in conventional systems.

It is now believed that the introduction into the base zone has two main effects. In all cases, injection into the base zone causes turbulence in the molten iron and can set up currents which act to stir the iron. In this way, the heat of the material in the base zone is distributed more evenly which reduces the tendency for the material to solidify. This is particularly effective when the additive is a gas.

Introduction of the additive also encourages impurities present in the molten iron to rise into the mineral melt. This tends to decrease the tendency for the iron to solidify as it removes solid particles around which the iron can precipitate. It may also reduce the melting point of the material in the base zone.

Where the additive comprises an oxidising agent, it will react preferentially with the impurities in the iron, such as silicon. The reaction of silicon to silica is thought to be particularly important. The oxides created then rise out of the molten iron into the mineral melt.

Any carbon which is present in the base zone can be oxidised by the oxidising agent to carbon monoxide or carbon dioxide. This is an exothermic reaction. As well as heat, the reaction also creates gas which causes turbulence. Both of these effects act to reduce the tendency of the molten iron to solidify.

The additive comprises at least one substance selected from the group consisting of oxidising agent and non-reducing gases. Thus, the additive may comprise one or more oxidising agents, or one or more non-reducing gases, or a combination of one or more oxidising agents with one or more non-reducing gases.

In this context, "oxidising agent" means any material that is capable of oxidising compounds that are commonly found in the base zone with molten iron, such as silicon, phosphorus and carbon.

The additive can be solid, liquid or gaseous. Suitable liquids include glycerol and sugars, which are oxidising agents in the context of the invention. Sugar may also be used in solid form.

The additive preferably comprises an oxidising agent. It can comprise a non-gaseous oxidising agent such as FeO or CaCO₃ (both solids), but is preferably an oxidising gas, such as oxygen or ozone.

Alternatively or additionally, a non-reducing gas can be used. Some gaseous oxidising agents are also non-reducing gases. However, other non-oxidising gases can be used, for instance nitrogen and argon.

One example of additive which is a blend is air, which comprises an oxidising gas (oxygen), which is also a non-reducing gas, and additional non-reducing gases including nitrogen.

Injection rates depend upon the composition of the mineral charge, but are generally in the range of 10 to 50kg per hour for air injection. Where pure oxygen is injected, the rate is preferably in the range of 2 to 10 kg/hour.

The gas is preferably pressurised, for instance to between 0.5 to 8 bar gauge, preferably around 2 bar gauge where bar gauge is the absolute pressure minus atmosphere pressure (which is around 1 atmosphere), i.e., it is a measure of how much the gas has been pressured, starting from normal atmosphere pressure. Bar gauge is used because it can easily be determined in the process as it can be read directly from a pressure gauge. Alternatively a lower pressure can be used such as 0.2 to 0.3 bar gauge which is adequate to achieve the desired result.

In the invention the additive is released directly into the base zone of the furnace. That is, the additive is introduced in such a way that when it is in an active form it is exposed first to the molten material in the base zone and is not previously exposed in an active form to the atmosphere in other zones in the furnace or other materials in the furnace.

In order to achieve this, preferably the additive is injected directly into the base zone and so does not pass at all through any other zone of the furnace. This is discussed further below. When the additive is a non-reducing gas it is usually injected directly into the base zone.

When the additive is a non-gaseous oxidising agent, in the preferred embodiment it is also injected into the base zone directly. This means it can be used in an active form and does not need to be protected from the atmosphere in other zones of the furnace. By active form we mean that it is in a form in which it can act as an oxidising agent to oxidise impurities in the base zone such as silicon, phosphorus or carbon.

However, in an alternative embodiment, the additive which is a solid oxidising agent is provided in a form such that it can be introduced to the furnace in a position other than directly into the base zone but is protected as it passes through the other zones and is released only in its active form when it reaches the base zone. For instance, an additive may comprise an encapsulated substance which can be introduced, for example, through the top of the furnace and passes down the furnace in encapsulated form. The encapsulating material is such that when it contacts the molten material in the base zone it allows the encapsulated substance to be released.

Alternatively, the additive can be introduced in to an areas other than the base zone in a chemically non-active form (a form in which it would not be capable of acting as an oxidising agent in the base zone). The non-active form would then react in the furnace so that when it reaches the base zone it is in an active form and can act as an oxidising agent for impurities in the iron such as silicon, phosphorus or carbon.

It is important in the invention that the additive (when it can act as an additive, i.e. when it is in an active form) is released directly into the base zone. Hence, the additive does not come into substantial contact with materials in other zones prior to contacting the melt material in the base zone and preferably does not come into any contact with materials in other zones at all. We believe that if additive is injected into other zones, for instance with the mineral materials charged, such that it forms part of the charge and comes into contact with the atmosphere in the top and middle sections of the furnace, it is not effective in solving the problem of reduced tapping intervals.

The additive may be injected directly into the base zone through any suitable opening in the relevant portion of the furnace wall. For example, a pipe can be provided in the base of the furnace through which gaseous or solid additives can be injected. Where a pipe is used, it can be used with or without a nozzle.

It is usually necessary to inject the additive continuously during the process to ensure that the injection inlet does not become blocked with molten iron.

In the preferred embodiment, the additive is injected using a plug. The plug is preferably made of a heat-resistant material such as ceramic and can have several channels through it. For instance, the plug is arranged so that it has upper and lower ends, the upper end being positioned within the base zone and the lower end being positioned outside the base of the furnace. One or more channels extend from the lower end to the upper end. For instance, there may be two or three or even more channels. The lower end can be connected to an inlet conduit in communication with the channel or channels so that material can be forced through the conduit and into and through the channels.

Instead of being provided with one or more channels, the plug as a whole can be porous. This is particularly valuable when the additive is gaseous.

The additive is usually passed through the plug under pressure of at least 1.5 bar gauge, preferably around 2 to 3 bar gauge.

Porous plugs which are suitable for use in the present invention are known in the field of metallurgic processing. Examples of plugs which are suitable for use in the present invention are given in US 5,437,435 and US 5,312,092.

Preferably the plug is frustoconical in shape and is positioned so that the end which has the smaller diameter faces the inside of the furnace. Generally the base of the furnace is lined with refractory bricks and the plug device is positioned so as to pass through this lining. Preferably bricks are provided flush with a surface of the plug. Thus, they may be flush with the side surfaces (sloping surfaces in the case of a frustoconical plug) or the lower end, or both. These may be the same bricks as the lining bricks (for example alumina or silica) or may be made with other materials such as silicon carbide.

A plug can be replaced if it is worn out through the action of the additive passing through it.

### Figure

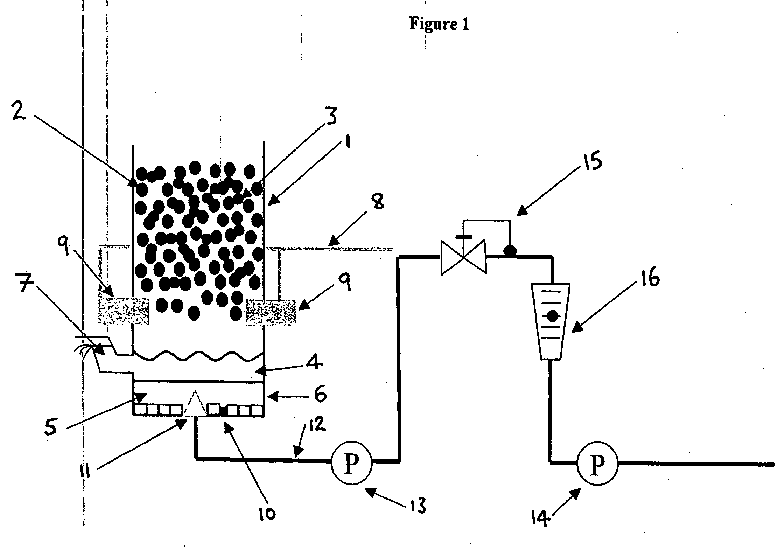

Figure 1 is a diagram of apparatus suitable for use in the present invention. A preferred embodiment of the invention is described below with reference to the Figure.

The apparatus comprises a furnace 1 in which raw materials 2 and fuel 3 is charged. The fuel is burnt in the furnace and the raw materials melt and mix together to form a mineral melt 4. The iron oxides in the raw materials are reduced to molten iron 5 and collect in the base zone 6 of the furnace 1.

The mineral melt is removed from the furnace through outlet 7 and is conveyed to fiberising equipment (not shown) where mineral fibres are formed.

Combustion air is provided from the combustion air system 8 and is fed into the furnace in the melting region through tuyeres 9. The tuyeres 9 are positioned above the mineral melt pool and provide air to aid combustion of the fuel.

The furnace comprises a tap hole 10 through which the liquid iron mixture is removed.

A porous plug 11 is positioned in the base zone of the furnace and air is injected though it. The air is provided through the pipes 12. Pressure gauges13 and 14 are used to measure the pressure of the air. A constant flow valve 15 is provided along with a flow measurement system 16 to regulate the flow of air, or of another additive which may be used instead of air.

## Claims

1. A process for the production of mineral fibres comprising:
providing a furnace (1);
charging to the furnace mineral materials which comprise iron oxides;
melting the charged mineral materials in a reducing atmosphere, such that there is a base zone (6) in the furnace in which molten iron (5) collects, and a melt pool above the base zone where mineral melt (4) collects;
removing mineral melt (4) from the furnace (1) and converting it to mineral fibres; and
removing molten iron (5) from the base zone (6);
**characterised in that**, during the process, an additive is released directly into the base zone (6) of the furnace wherein the additive comprises one or more substances selected from oxidising agents and non-reducing gases.

2. A process according to claim 1 wherein the additive comprises an oxidising agent.

3. A process according to claim 1 or claim 2 wherein the additive comprises air or purified oxygen.

4. A process according to any preceding claim wherein the additive is injected directly into the base zone (6) of the furnace.

5. A process according to claim 4 wherein the additive is injected through a porous plug.

6. A process according to claim 5 wherein the plug is ceramic and the additive is injected through it under a pressure of 0.2 to 0.3 bar gauge.

7. A process according to any preceding claim wherein the additive is a non-reducing gas.

8. A process according to claim 1 or claim 2 wherein the additive comprises a substance in liquid form.

9. A process according to claim 8 wherein the additive comprises glycerol or sugar in liquid form or in solution.

10. A process according to claim 1 or claim 2 wherein the additive comprises a substance in solid form.

11. A process according to claim 10 wherein the additive is FeO or sugar in solid form.

12. A process according to any preceding claim wherein the mineral materials which are charged to the furnace comprise a material selected from silica, other silicon compounds and silicon.

13. A process according to any preceding claim wherein the mineral melt has a composition as follows, measured as weight of oxides.
| | |
|---|---|
| SiO₂ | 33 to 43% |
| Al₂O₃ | 16 to 24% |
| CaO + MgO | 23 to 33% |
| FeO | 3 to 9% |
| Na₂O + K₂O | 1 to 8% |
| TiO₂ | 0 to 3% |
| Other Elements | 0 to 15%. |

14. Apparatus for the production of mineral fibres from mineral materials comprising iron oxide, the apparatus comprising:
a furnace (1) which comprises a top section, a middle section, and a base section (6), wherein
the top section comprises a mineral material inlet,
the middle section comprises a mineral melt outlet and
the base section (6) comprises a tapping outlet (10) through which molten iron (5) can be removed and injection means through which an additive can be injected; and
fiberising means which are positioned in fluid communication with the mineral melt outlet and are capable of converting mineral melt to mineral fibres.

15. Apparatus according to claim 14 wherein the injection means comprises a plug which is position in the wall of the furnace (1) so as to provide communication between the base section (6) and the outside of the furnace (1).

16. Apparatus according to claim 15 wherein the plug is porous or is provided with channels so as to be capable of transferring additive material from a lower end positioned outside the furnace (1) to an upper end positioned within the base section (6) of the furnace (1).

## Patentansprüche

1. Verfahren zur Herstellung von Mineralfasern, umfassend:
Bereitstellen eines Ofens (1)
Beschickung des Ofens mit Mineralstoffen, die Eisenoxide umfassen;
Schmelzen der beschickten Mineralstoffe in einer reduzierenden Atmosphäre, derartig, dass es eine Basiszone (6) im Ofen gibt, in der sich geschmolzenes Eisen (5) sammelt und ein Schmelzbad über der Basiszone gibt, wo sich Mineralschmelze (4) sammelt;
Entfernen der Mineralschmelze (4) aus dem Ofen (1) und deren Umwandlung in Mineralfasern; und
Entfernen des geschmolzenen Eisens (5) aus der Basiszone (6);
**dadurch gekennzeichnet, dass**, während des Verfahrens, ein Zusatzmittel direkt in die Basiszone (6) des Ofens freigesetzt wird, wobei das Zusatzmittel eine oder mehrere Substanzen umfasst, die aus Oxidationsmitteln und nicht reduzierenden Gasen selektiert sind.

2. Verfahren nach Anspruch 1, wobei das Zusatzmittel ein Oxidationsmittel umfasst.

3. Verfahren nach Anspruch 1 oder Anspruch 2, wobei das Zusatzmittel Luft oder gereinigten Sauerstoff umfasst.

4. Verfahren nach einem beliebigen vorangehenden Anspruch, wobei das Zusatzmittel direkt in die Basiszone (6) des Ofens eingespritzt wird.

5. Verfahren nach Anspruch 4, wobei das Zusatzmittel durch einen porösen Stopfen eingespritzt wird.

6. Verfahren nach Anspruch 5, wobei der Stopfen keramisch ist und das Zusatzmittel durch diesen hindurch mit einem Druck von 0,2 bis 0,3 bar Überdruck eingespritzt wird.

7. Verfahren nach einem beliebigen vorangehenden Anspruch, wobei das Zusatzmittel ein nicht reduzierendes Gas ist.

8. Verfahren nach Anspruch 1 oder Anspruch 2, wobei das Zusatzmittel eine Substanz in flüssiger Form umfasst.

9. Verfahren nach Anspruch 8, wobei das Zusatzmittel Glycerol oder Zucker in Flüssigform oder in Lösung umfasst.

10. Verfahren nach Anspruch 1 oder Anspruch 2, wobei das Zusatzmittel eine Substanz in fester Form umfasst.

11. Verfahren nach Anspruch 10, wobei das Zusatzmittel FeO oder Zucker in fester Form ist.

12. Verfahren nach einem beliebigen vorangehenden Anspruch, wobei die Mineralstoffe, mit denen der Ofen beschickt wird, ein Material umfassen, das aus Siliciumdioxid, anderen Siliciumzusammensetzungen und Silicium selektiert wurde.

13. Verfahren nach einem beliebigen vorangehenden Anspruch, wobei die Mineralschmelze folgende Zusammensetzung, als Gewicht von Oxiden gemessen, aufweist.
| | |
|---|---|
| SiO₂ | 33 bis 43 % |
| Al₂O₃ | 16 bis 24 % |
| CaO + MgO | 23 bis 33 % |
| FeO | 3 bis 9 % |
| Na₂O + K₂O | 1 bis 8 % |
| TiO₂ | 0 bis 3 % |
| Andere Elemente | 0 bis 15 %. |

14. Vorrichtung zur Herstellung von Mineralfasern aus Mineralstoffen, die Eisenoxid umfassen, wobei die Vorrichtung umfasst:
Einen Ofen (1), der einen Abschnitt, einen mittleren Abschnitt und einen unteren Abschnitt (6) umfasst,
wobei
der obere Abschnitt einen Mineralstoffeinlass umfasst,
der mittlere Abschnitt einen Auslass für die Mineralschmelze umfasst, und
der untere Abschnitt (6) einen Abstichauslass (10), durch den geschmolzenes Eisen (5) entfernt werden kann und Einspritzmittel umfasst, durch die sich ein Zusatzmittel einspritzen lässt; und
Zerfaserungsmittel, die in Fluidverbindung mit dem Auslass für Mineralschmelze positioniert und fähig sind, die Mineralschmelze in Mineralfasern umzuwandeln.

15. Vorrichtung nach Anspruch 14, wobei das Einspritzmittel einen Stopfen umfasst, der in der Wand des Ofens (1) positioniert ist, um Kommunikation zwischen dem unteren Abschnitt (6) und der Außenseite des Ofens (1) bereitzustellen.

16. Vorrichtung nach Anspruch 15, wobei der Stopfen porös oder mit Kanälen versehen ist, um fähig zu sein, ein Zusatzmittelmaterial von einem unteren Ende, das außerhalb des Ofens (1) positioniert ist, zu einem oberen Ende zu transferieren, das innerhalb des unteren Abschnitts (6) des Ofens (1) positioniert ist.

## Revendications

1. Procédé pour la fabrication de fibres minérales consistant:
à prévoir un four (1);
à charger dans le four des matières minérales qui comprennent des oxydes de fer;
à faire fondre les matières minérales chargées dans une atmosphère réductrice, de telle manière qu'il existe une zone de base (6) dans le four à l'intérieur de laquelle le fer fondu (5) est recueilli, ainsi qu'un bain de fusion au-dessus de la zone de base où s'accumule la fusion minérale (4);
à enlever la fusion minérale (4) du four (1) et à la convertir en fibres minérales; et aussi
à enlever le fer fondu (5) de la zone de base (6);
**caractérisé en ce que**, pendant le procédé, un additif se dégage directement dans la zone de base (6) du four, cet additif comprenant une ou plusieurs substances sélectrionnées parmi les agents oxydants et les gaz non réducteurs.

2. Procédé selon la revendication 1, **caractérisé en ce que** l'additif comprend un agent oxydant.

3. Procédé selon la revendication 1 ou la revendication 2, **caractérisé en ce que** l'additif comprend de l'air ou de l'oxygène purifié.

4. Procédé selon l'une quelconque des revendications précédentes, **caractérisé en ce que** l'additif est injecté directement dans la zone de base (6) du four.

5. Procédé selon la revendication 4 **caractérisé en ce que** l'additif est injecté à travers un tampon poreux,

6. Procédé selon la revendication 5, **caractérisé en ce que** le tampon est fabriqué en céramique et **en ce que** l'additif est injecté à travers ce tampon à une pression relative comprise entre 0,2 et 0,3 bar.

7. Procédé selon l'une quelconque des revendications précédentes, **caractérisé en ce que** l'additif est un gaz non réducteur.

8. Procédé selon la revendication 1 ou la revendication 2, **caractérisé en ce que** l'additif comprend une substance sous forme de liquide.

9. Procédé selon la revendication 8, **caractérisé en ce que** l'additif comprend du glycérol ou du sucre sous forme de liquide ou bien en solution.

10. Procédé selon la revendication 1 ou la revendication 2, **caractérisé en ce que** l'additif comprend une substance sous forme de solide.

11. Procédé selon la revendication 10, **caractérisé en ce que** l'additif est du FeO ou du sucre sous forme de solide.

12. Procédé selon l'une quelconque des revendications précédentes, **caractérisé en ce que** les matières minérales chargées dans le four comprennent une matière sélectionnée parmi la silice, d'autres composés de silicium ou bien encore le silicium.

13. Procédé selon l'une quelconque des revendications précédentes, **caractérisé en ce que** la composition de la fusion minérale est la suivante, mesurée en poids d'oxydes:
| | |
|---|---|
| SiO₂ | 33 à 43% |
| Al₂O₃ | 16 à 24% |
| CaO + MgO | 23 à 33% |
| FeO | 3 à 9% |
| Na₂O + K₂O | 1 à 8% |
| TiO₂ | 0 à 3% |
| Autres éléments | 0 à 15% |

14. Appareil pour la fabrication de fibres minérales à partir de matières minérales comprenant entre aures l'oxyde de fer, l'appareil comportant:
un four (1) qui comprend une section du haut, une section au milieu, et une section de base (6), **caractérisé en ce que**
la section du haut comprend une admission pour les matières minérales,
la section au milieu comprend une sortie pour la fusion minérale, et
la section de base (6) comprend une prise de coulée (10) à travers laquelle le fer fondu (5) peut être extrait ainsi qu'un moyen d'injection permettant d'injecter l'additif; et aussi
des moyens de conversion en fibres qui se trouvent en communication fluide avec la sortie de la fusion minérale et qui peuvent convertir cette fusion minérale en fibres minérales.

15. Appareil selon la revendication 14, **caractérisé en ce que** le moyen d'injection comprend un tampon qui est positionné dans la paroi du four (1) de manière à faire communiquer la section de base (6) avec l'extérieur du four (1).

16. Appareil selon la revendication 15, **caractérisé en ce que** le tampon est poreux ou bien il est doté de rigoles de manière à pouvoir transférer l'additif à partir d'une extrémité inférieure positionnée à l'extérieur du four (1) et vers une extrémité supérieure positionnée dans la section de base (6) du four (1).
